# EUROPEAN PATENT SPECIFICATION

(11) **EP 0 540 108 B1**
(45) Date of publication and mention of the grant of the patent: **03.01.1996**
(21) Application number: 92203293.3
(22) Date of filing: 26.10.1992
(51) Int. Cl.: C08F 4/642

(54) **Catalyst composition**
Katalisatorzusammensetzung
Composition de catalyseur

(30) Priority: 28.10.1991 EP 91202784
(43) Date of publication of application: 05.05.1993
(73) Proprietor: SHELL INTERNATIONALE RESEARCH MAATSCHAPPIJ B.V., NL-2596 HR Den Haag (NL)
(72) Inventor: De Boer, Eric Johannes Maria, NL-1031 CM Amsterdam (NL); Steernberg, Koen, NL-1031 CM Amsterdam (NL)

(56) References cited:
- EP-A- 0 283 739
- EP-A- 0 316 155
- JOURNAL OF ORGANOMETALLIC CHEMISTRY. vol. 417, no. 1-2, 1 October 1991, LAUSANNE CH pages 9 - 27 P.BURGER 'ANSA METALLOCENE DERIVATIVES XXIII.'
- CHEMISTRY LETTERS 1989, PP 1853-1856.

## Description

This invention relates to a catalyst composition and a process for the polymerisation of one or more alpha-olefins comprising contacting the alpha-olefin(s) with the catalyst composition.

Catalyst compositions based upon
a. a Group IVA metal compound of the general formula (cₚ)₂MeX₂ wherein Cp represents identical or different cyclopentadienyl groups which may be substituted with one or more alkyl groups, Me represents a Group IVA metal and X represents halogen substituents attached to the Group IVA metal, and
b. an aluminoxane,
and the use of these catalyst compositions in the polymerisation of one or more alpha-olefins, are known from EP-A-283739. When alpha-olefins having at least three carbon atoms are polymerised and the cyclopentadienyl groups of the catalyst composition used are mono-, di-, tri- or tetraalkyl substituted, the products of the polymerisation are polyolefins having a vinylidene end group, i.e., for example, a group of the formula -C(CH₃)=CH₂ or -C(C₂H₅)=CH₂, when propene or butene-1, respectively, are polymerised. The application of atadic polymers of this type, having a number average molecular weigt of 700-5000 and a vinylidene end group, as intermediate in the preparation of additives useful in lubricating oil compositions is the subject matter of the non-prepublished British patent application 9027000.0, now European patent application 0490454. It is to be noted that the catalyst compositions which comprise pentaalkylcyclopentadienyl groups may give polyolefins with an vinyl end group, instead of a vinylidene end group.

Among the catalysts known from EP-A-283739, mentioned hereinbefore, the ones with the highest activity are those of which the cyclopentadienyl groups are substituted with three alkyl groups, specifically in a 1,2,4-arrangement. Catalysts of which the cyclopentadienyl groups are substituted with three alkyl groups in a 1,2,3-arrangement have a substantially lower polymerisation activity than those of which the cyclopentadienyl groups are substituted in the 1,2,4-arrangement. The catalysts which have one alkyl group or five alkyl groups attached to their cyclopentadienyl groups have a much lower activity, which activity approaches the activity of the catalysts which have unsubstituted cyclopentadienyl groups. Hence, in order to benefit from the optimum polymerisation activity of these catalyst compositions one should apply 1,2,4-trialkyl substituted cyclopentadienyl groups.

In order to be effective in the polymerisation the known catalyst compositions contain a relatively large amount of the aluminoxane component. This is disadvantageous because the amount of catalyst remnants in the finished polymer, in particular aluminium, may be high and the polymerisation process may not be cost effective. The amount of the catalyst composition to be employed in the process can be reduced when a catalyst of high activity can be chosen.

A disadvantage which is inherent to the use of 1,2,4-trialkyl substituted cyclopentadienyl groups is that the preparation of the corresponding cyclopentadienes, from which the Group IV metal compounds can be prepared, requires the introduction of the three alkyl groups in the specific arrangement. This is a difficult task to accomplish or, alternatively, the preparation of the corresponding cyclopentadienes requires starting materials which may not be easily available.

Hence, the object of the present invention is the provision of catalyst compositions which have a high activity in the polymerisation of alpha-olefins, which can be used in the preparation of polyolefins having a vinylidene end group and which can be prepared easily from readily available materials.

It has now been found that catalyst compositions based on bis(cyclopentadienyl) Group IVA metal compounds of which the cyclopentadienyl groups are substituted with a single aryl group can have a significantly higher activity in the polymerisation of alpha-olefins than catalyst compositions based on bis(cyclopentadienyl) Group IVA metal compounds with unsubstituted cyclopentadienyl groups, whilst polymers can be obtained which have a vinylidene end group. Surprisingly, and in contrast with the known catalyst compositions, based on alkyl substituted cyclopentadienyl groups, the activity of the catalyst compositions based on aryl substituted cyclopentadienyl groups is the highest with mono substituted cyclopentadienyl groups. The aryl group may or may not be substituted. Monoarylcyclopentadienes can be easily prepared.

Accordingly, the present invention relates to catalyst compositions based upon
a. a Group IVA metal compound of the general formula (Cp)ₚMeX₄₋ₚ wherein Cp represents identical or different cyclopentadienyl groups which are not mutually bridged and which may be substituted with one or more hydrocarbyl groups with the understanding that at least one cyclopentadienyl group is substituted with a single optionally substituted aryl group, Me represents a Group IVA metal, X represents one or more substituents attached to the Group IVA metal which substituents are selected from the group consisting of hydrocarbyl groups, hydrocarboxy groups, hydrocarbamide groups, hydrogen and halogen, and p is an integer of from 1 to 4, and
b. an aluminoxane.

The term hydrocarboxy covers alkyloxy and aryloxy groups and the term hydrocarbamide covers alkylamide and arylamide groups.

The invention also relates to a process for the polymerisation of one or more alpha-olefins comprising contacting the alpha-olefin(s) with a catalyst composition according to the present invention.

Various documents, such as EP-A-129368, EP-A-226463, EP-A-128046 and EP-A-260999, disclose polymerisation catalyst compositions containing cyclopentadienyl Group IVA metal compounds and an aluminoxane. These documents teach that the cyclopentadienyl groups can be substituted with a wide variety of hydrocarbyl groups, such as alkyl, arylalkyl, alkenyl, aryl and alkylaryl, but they do not indicate a preference for aryl or alkylaryl groups. For example, they do not contain any example of compounds with an aryl or alkylaryl substituted cyclopentadienyl group. The documents further teach that any number of alkyl groups can be present on the cyclopentadienyl group, for example the bis(cyclopentadienyl)zirconium compounds can have alkyl, dialkyl, trialkyl, tetraalkyl or pentaalkyl substituted cyclopentadienyl groups. Therefore, a person skilled in the art will understand that the cyclopentadienyl compounds of these documents may contain any number of hydrocarbyl groups at the cyclopentadienyl groups and he does not avail of any further information about the optimum number of hydrocarbyl substituents.

Catalyst compositions containing a biscyclopentadienyl Group IVA metal compound and an aluminoxane wherein the cyclopentadienyl groups are connected by a bivalent bridging group and one or both cyclopentadienyl groups are monophenyl substituted are known from EP-A-316155. This document is, however, silent on the catalytic activity of these catalyst compositions in the polymerisation of alpha-olefins.

The present invention is in particular surprising in view of our recent finding with respect to catalyst compositions which are very similar to the catalyst compositions of the invention, in that they are based on a bisindenyl Group IVA metal compound and an aluminoxane wherein the two indenyl groups are monoaryl substituted at the five-membered ring and the two indenyl groups are connected to each other by a bivalent bridging group. The latter catalyst compositions, which are thus based on monoaryl substituted, bridged bisindenyl groups, do not show a substantially higher polymerisation activity than corresponding catalyst compositions which are based on unsubstituted, bridged indenyl groups.

Metals of Group IVA are as defined in the Periodic Table of the Elements published in Kirk-Othmer, Encyclopaedia of Chemical Technology, 2nd edition, Vol. 8, p. 94. Suitable Group IVA metals are selected from the group consisting of zirconium and hafnium. A preferred Group IVA metal is zirconium.

The catalyst compositions of the invention are based on Group IVA metal compounds of the general formula (Cₚ)ₚ MeX₄₋ₚ, as defined hereinbefore. In this formula p is an integer of from 1 to 4, however, it is preferred that p equals 2. At least one cyclopentadienyl group (Cp) is substituted with one optionally substituted aryl group. Typically, each cyclopentadienyl group is substituted with one aryl group. The aryl groups attached to the cyclopentadienyl groups may be identical or different. Examples of suitable aryl groups are naphthyl groups and biphenyl groups. Very suitable aryl groups are phenyl groups.

The aryl group(s) may or may not be further substituted. Preferably, the aryl group(s) are substituted with one or more hydrocarbyl groups, such as (cyclo)alkyl and aryl groups, alkyloxy groups and dialkylamino groups, halogenated hydrocarbyls, halides or hydrocarbyl groups containing hetero atoms such as B, Al, Si, Ge, Sn, N, P, As, Sb, O, S, Se and Te. The alkyloxy and dialkylamino groups when present are preferably shielded, for example by neighbouring (cyclo)alkyl groups. Typically, such shielding is effected by bulky alkyl groups, such as t-butyl groups or t-amyl groups. More preferred substituents of the aryl group(s) are t-alkyl groups, in particular, those having up to 10 carbon atoms, for example t-butyl and t-amyl groups. Alkyloxy groups are typically those having up to 10 carbon atoms, such as methyloxy, ethyloxy, isopropyloxy, t-butyloxy, hexyloxy and 2-decyloxy groups.

The position of the optional substituents at the aryl group, relative to the cyclopentadienyl group to which the aryl-group is attached, is not important. When the aryl group is a phenyl group, the substituent(s) is/are typically positioned at the para and/or meta positions. When there are two or more substituents at the phenyl group, it is preferred that at the most one of them is positioned at an ortho position.

The substituent(s) X, attached to the Group IVA metal, is/are selected from the group consisting of hydrocarbyl groups, hydrocarboxy groups, hydrocarbamide groups, hydrogen and halogen. When there is more than one substituent X, the substituents X may be identical or different. Suitable substituent(s) X are hydrocarbyl groups, in particular having up to 20 carbon atoms, more in particular up to 10 carbon atoms. Preferred hydrocarbyl groups X are phenyl groups and alkyl groups of up to 6 carbon atoms. Most preferred hydrocarbyl groups X are methyl groups. Particularly suitable substituents X are halogens, preferably chlorine.

Very good results can be achieved with catalyst compositions based on Group IVA metal compounds of the general formula (Cp)ₚ MeX₄₋ₚ as defined hereinbefore wherein p equals 2 and (Cp)₂ is selected from the group consisting of:
bis(phenylcyclopentadienyl),
bis[(4-t-butylphenyl)cyclopentadienyl],
bis[(2-methylphenyl)cyclopentadienyl],
bis[(2-ethylphenyl)cyclopentadienyl],
bis[(2-i-propylphenyl)cyclopentadienyl],
bis[(4-chlorophenyl)cyclopentadienyl],
bis[(3,5-di-t-butylphenyl)cyclopentadienyl],
bis[(3,5-di-t-butyl-4-methyloxyphenyl)cyclopentadienyl], (cyclopentadienyl)(3,5-di-t-butyl-4-methyloxyphenyl-cyclopentadienyl),
bis-(3,5-di-t-butyl-2-methyloxyphenylcyclopentadienyl) and (cyclopentadienyl)(3,5-di-t-butyl-2-methyloxyphenylcyclopentadienyl).

Of these, the zirconium dichlorides are particularly preferred.

The catalyst compositions of the invention contain an aluminoxane. Aluminoxanes are well known polymeric aluminium compounds which can be represented by the general formulae (R-Al-O)_{q}, which represents a cyclic compound, and R(R-Al-O)_{q}-AlR₂, which represents a linear compound. In these general formulae R represents an alkyl group, preferably having in the range of from 1 to 5 carbon atom, such as methyl, ethyl, iso-butyl or i-propyl and q is an integer of from 1 to 100, especially q is in the range of from 5 to 20. Also very effective is a mixture of methyl and isobutyl aluminoxane. Most preferably R is methyl, so that preferably the aluminoxane comprises a methylaluminoxane. The aluminoxanes are suitably prepared by reacting water with trialkylaluminium compounds by methods known in the art. A mixture of linear and cyclic compounds is usually obtained.

The molar ratio of the aluminoxane to the Group IVA metal compound may vary between wide ranges. Suitably the molar ratio of the aluminoxane to the Group IVA metal compound is within the range of from 2 to 10000, preferably from 50 to 2000, calculated as gram atom aluminium per gram atom of Group IVA metal.

The catalyst composition of the present invention may be prepared from the Group IVA metal compound and the aluminoxane prior to the contacting with the alpha-olefin(s) to be polymerised or they may be prepared in situ, i.e. in the presence of the alpha-olefins. It is preferred to prepare the catalyst composition by mixing together the two components in solution in a solvent such as toluene to form a liquid catalyst system.

In the present polymerisation process one or more alpha-olefins are contacted with the catalyst composition of this invention. The alpha-olefin(s) may include, for example, ethene, propene, hexene, styrene and 4-methylstyrene. The alpha-olefin(s) are preferably aliphatic and have typically up to 10 carbon atoms, inclusive. The present catalyst compositions can also effect the polymerisation of cyclic olefins such as cyclobutene, cyclopentene, cyclohexene and cycloheptene. Very good results can be obtained in the polymerisation of propene.

The present polymerisation process can be carried out over a wide range of temperatures and pressures. The polymerisation process is suitably carried out at a temperature in the range of from -60 to 200 °C, preferably from 0 to 100 °C, and suitably at a pressure in the range of from 10 to 50000 KPa (0.1 to 500 bar), preferably from 100 to 10000 KPa (1 to 100 bar). The optimum conditions of temperature and pressure used for a particular catalyst composition to maximise the yield of the desired polymer having the desired molecular weight can readily be established by those skilled in the art. Such a quantity of the catalyst system is usually employed in the reaction mixture as to contain from 10⁻ to 10⁻⁷ gram atom, in particular 10⁻³ to 10⁻⁶ gram atom, of the Group IVA metal per litre volume of the reaction mixture.

The present polymerisation process is generally, although not necessarily, carried out in an inert liquid solvent which is suitably also the solvent for the catalyst components. The process can be carried out in batch or continuous operation. The polymerisation is suitably carried out in the absence of air or moisture. Reaction times of from 5 minute to 72 hours have been found to be suitable, dependent on the activity of the catalyst. After a suitable reaction time, a conventional catalyst deactivating agent such as a proton donor, for example methanol or another alcohol, may be added to the reaction mixture, if desired, to terminate the polymerisation.

The resulting polymers may vary widely in molecular weight. Suitably, the number average molecular weight amounts from 200 to 500000, preferably from 300 to 10000. Typically, the molecular weight distribution is such that the ratio of the weight-average molecular weight to the number-average molecular weight amounts to from 1.1 to 5.0, more typically from 1.6 to 2.4.

As stated hereinbefore, the molecular weight of the polymer to be prepared can be controlled by a selection of the temperature and the pressure of the polymerisation reaction mixture for a given combination of a catalyst composition and one or more alpha-olefins. It is known in the art that, in addition, the molecular weight of the polymer can be controlled by polymerising in the presence of hydrogen. However, as in the presence of hydrogen the unsaturated end of the polymer may (partly) be converted to a saturated end group, this method of molecular weight control may be less attractive, depending on the application envisaged for the polymer.

The polymers prepared in the present process can be recovered by conventional techniques, for example by removing the solvent and/or the unreacted olefin(s) by evaporation. Catalyst remnants may (partly) be removed from the polymer, for example, by washing or extracting the polymer with a suitable liquid.

Polymers prepared according to the present process can be converted to succinimide derivatives by reaction with maleic anhydride and subsequently with an amine, such as a C₁₋₅₀ amine, preferably an amine of the general formula H-(NH-(CH₂)ₘ)ₙ-NH₂ wherein m is an integer of from 2 to 4 and n is an integer of from 1 to 9, by methods described in EP-A 0 490 454, referred to hereinbefore. Succinimide derivatives thus prepared, in particular those which are based on an atactic polypropylene with a number-average molecular weight in the range of from 700 to 5000 and substantially having a vinylidene end groups, can be useful as dispersant additives in lubricating oil compositions.

The Group IVA metal compounds of the present catalyst compositions are novel compounds. Accordingly, the present invention also relates to Group IVA metal compounds of the general formula (Cp)ₚMeX₄₋ₚ wherein Cp represents identical or different cyclopentadienyl groups which may be substituted with one or more hydrocarbyl groups with the understanding that at least one cyclopentadienyl group is substituted with a single optionally substituted aryl group, Me represents a Group IVA metal, X represents one or more substituents attached to the Group IVA metal which substituents are selected from the group consisting of hydrocarbyl groups, alkyloxy groups, hydrogen and halogen, and p is an integer of from 1 to 4.

The novel Group IVA metal compounds can be prepared by methods which are known per se. For example, bis(arylcyclopentadienyl)zirconium dichlorides can suitably be prepared by reaction of the corresponding arylcyclopentadienyllithium with zirconium tetrachloride. The preparation of arylcyclopentadienyllithium compounds can be accomplished by reacting a corresponding arylcyclopentadiene with n-butyllithium.

Arylcyclopentadienes can be prepared by methods known per se, for example, by reacting an aryl bromide with n-butyllithium and reacting the obtained aryllithium with a cyclopentenone. The adduct of the aryllithium and the cyclopentenone, thus obtained, may subsequently be treated with an acid to obtain the arylcyclopentadiene.

The invention will now be further described with reference to the following examples. The experimental procedures were carried out with rigorous exclusion of oxygen and water, unless water was involved as one of the reactants, or unless indicated otherwise.

### Example 1

### Preparation of bis[(4-t-butylphenyl)cyclopentadienyl]zirconium dichloride

A solution of 34 g (0.16 mole) 4-t-butylphenylbromide in 50 ml diethyl ether was slowly added to a stirred mixture of 100 ml of a solution of n-butyllithium in hexane (1.6 mole/l) and 50 ml diethyl ether, while the temperature of the mixture was kept at -25 °C. After completion of the addition the temperature of the resultant mixture was allowed to rise slowly to room temperature. Subsequently the temperature was decreased to -25 °C and 13.2 g (0.16 mole) 2-cyclopenten-1-one dissolved in a small volume of diethyl ether was slowly added. The suspension thus obtained was allowed to adopt room temperature and additionally stirred for one hour. An excess water was added. The 1-(4-t-butylphenyl)-cyclopent-2-en-1-ol product was isolated from the reaction mixture by extraction with diethyl ether and subsequently purified by chromatography over silica, using dichloromethane as the elution solvent.

A solution of 7 g (0.032 mole) 1-(4-t-butylphenyl)cyclopent-2-en-1-ol and 0.1 g (0.00058 mole) p-toluenesulphonic acid in 70 ml toluene was gently heated at 40 °C for 5 minutes. The mixture was washed with aqueous sodium hydroxide and subsequently with water. After drying the organic phase over magnesium sulphate for 2 hours, 20.3 ml of a solution of n-butyllithium in hexane (1.6 mole/l, 0.032 mole n-butyllithium) was added. The precipitate which was formed was washed three times with hexane to obtain 4-t-butylphenylcyclopentadienyllithium as an off-white solid material.

A solution of 1.2 g (0.0059 mole) 4-t-butylphenylcyclopentadienyllithium in 20 ml tetrahydrofuran was slowly added at room temperature to a solution of 0.685 g (0.0029 mole) zirconium tetrachloride in 50 ml tetrahydrofuran. After stirring for an additional 2 hours' period, the tetrahydrofuran was removed by evaporation. The resultant residue was taken up in hot toluene, undissolved material was removed by filtration and the resultant clear solution was evaporated to dryness. The solid residue obtained was taken up in dichloromethane. Undissolved, off-white solids were removed by centrifugation and decantation. The clear solution was evaporation to dryness yielding bis[(4-t-butylphenyl)-cyclopentadienyl]zirconium dichloride as a yellow solid material. The proton-NMR data of the product obtained have been given in Table 1.

### Examples 2 - 8

### Preparation of various bis(arylcyclopentadienyl)zirconium dichlorides

The methods outlined in Example 1 were essentially repeated, except that 4-t-butylphenylbromide, 1-(4-t-butylphenyl)cyclopent-2-en-1-ol and 4-t-butylphenylcyclopentadienyllithium were replaced by equimolar quantities of various arylbromides and the corresponding 1-arylcyclopent-2-en-1-ols and arylcyclopentadienyllithiums, respectively. The intermediate products obtained were 1-arylcyclopent-2-en-1-ols and arylcyclopentadienyllithiums.

The spectral data, as measured by proton-NMR spectroscopy, of the eight bis(arylcyclopentadienyl)zirconium dichlorides obtained are given in Table 1.

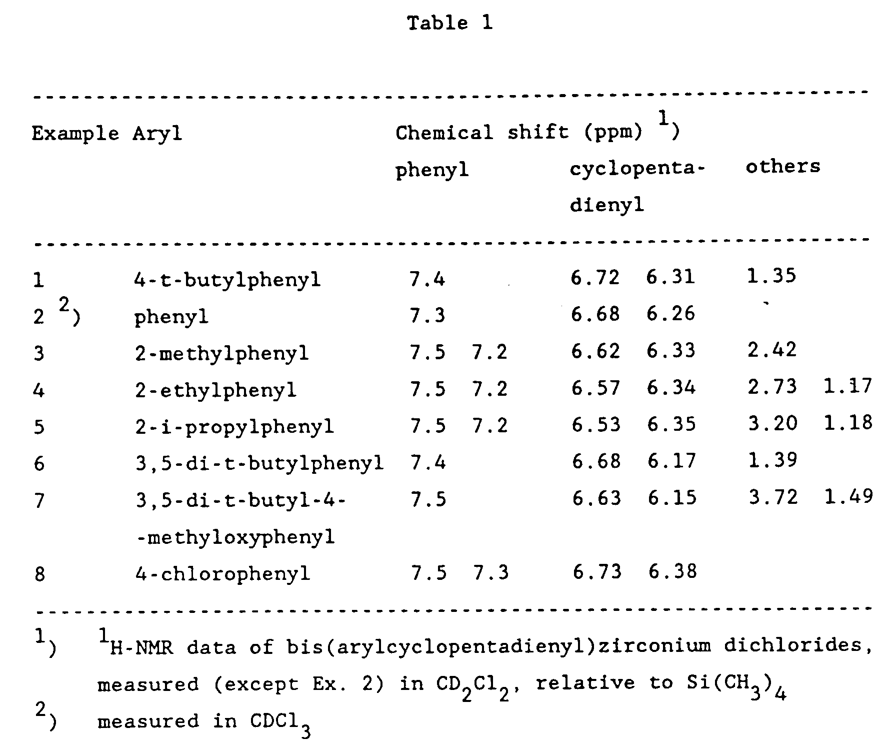

### Example 9 (for comparison)

### Preparation of bis(1,2-diphenylcyclopentadienyl)zirconium dichloride

Glutarylchloride (28.2 g, 0.167 mole) was slowly added to a mixture of 50 g (0.375 mole) anhydrous aluminium trichloride and 250 ml benzene, which was stirred vigorously in an ice/water bath. After completion of the addition the ice/water bath was removed and stirring was continued for two hours. The solution obtained was slowly poured into a mixture of 200 g crushed ice and 40 ml concentrated aqueous hydrochloric acid. The 1,5-diphenyl-1,5-pentanedione thus formed was recovered by extraction and crystallisation.

A suspension of 7.8 g (0.12 mol) zinc powder in 20 ml tetrahydrofuran was added slowly to a mixture of 5.0 g (0.02 mol) 1,5-diphenyl-1,5-pentanedione and 11.4 g (0.06 mol) titanium tetrachloride in 500 ml tetrahydrofuran which mixture was kept at -10 °C. After additional stirring at 0 °C during a 5 hours' period, the mixture obtained was made basic by the addition of a 10 % aqueous solution of potassium carbonate. The 1,2-diphenyl-1,2-cyclopentanediol obtained was recovered by extraction.

A mixture of 1.2 g 1,2-diphenyl-1,2-cyclopentanediol (0.0048 mole), activated molecular sieves 4A and a small amount of p-toluenesulphonic acid in 40 ml benzene was heated at 70 °C for 30 minutes. The mixture was filtered at room temperature. A solution (3.0 ml) of n-butyllithium in hexane (1.6 mole/l, 0.0048 mole n-butyllithium) was added to the filtrate. After 45 minutes stirring, a solution of 0.56 g zirconium tetrachloride (0.0024 mole) in tetrahydrofuran was slowly added. After stirring the mixture at 65 °C for three hours, the solvents were evaporated. The solid material obtained was taken up in dichloromethane and centrifuged. The supernatent was decanted and evaporated to dryness. The residue was washed with hexane and crystallised from toluene.

### Example 10 (for comparison)

### Preparation of bis(1,2,4-triphenylcyclopentadienyl)zirconium dichloride

The methods outlined in comparative Example 9 were essentially repeated except that glutaryl chloride, 1,5-diphenyl-1,5-pentanedione and 1,2-diphenyl-1,2-cyclopentanediol were replaced by equimolar quantities of 3-phenylglutaryl chloride, 1,3,5-triphenyl-1,5-pentanedione and 1,2,4-triphenyl-1,2-cyclopentanediol, respectively. The intermediate products obtained were 1,3,5-triphenyl-1,5-pentanedione and 1,2,4-triphenyl-1,2-cyclopentanediol, respectively.

### Example 11 (for comparison)

### Preparation of bis(1,2,3-triphenylcyclopentadienyl)zirconium dichloride

The methods outlined in comparative Example 9 were essentially repeated except that glutaryl chloride, 1,5-diphenyl-1,5-pentanedione and 1,2-diphenyl-1,2-cyclopentanediol were replaced by equimolar quantities of 2-phenylglutaryl chloride, 1,2,5-triphenyl-1,5-pentanedione and 1,2,3-triphenyl-1,2-cyclopentanediol, respectively. The intermediate products obtained were 1,3,5-triphenyl-1,5-pentanedione and 1,2,4-triphenyl-1,2-cyclopentanediol, respectively.

### Example 12 (for comparison)

### Preparation of bis(1,3-diphenylcyclopentadienyl)zirconium dichloride

A mixture of 8.1 g (0.03 mol) 3-benzyl-5-(2-hydroxyethyl)-4-methyl-1,3-thiazolium chloride, 180 ml triethylamine, 150 ml ethanol, 21 g (0.3 mol) 1-buten-3-one and 30.7 g (0.29 mol) benzaldehyde was gently stirred at 80 °C for 16 hours. Volatile components were removed by evaporation. The 1-phenyl-1,4-pentanedione thus formed was recovered by extraction and subsequent vacuum distillation.

A mixture of 9.7 g (0.055 mole) 1-phenyl-1,4-pentanedione, 500 ml water, 15 g sodium hydroxide and 1000 ml ethanol was heated under reflux for 4 hours. The mixture was allowed to cool to room temperature and it was neutralised with acid. Ethanol was evaporated. The 3-phenylcyclopent-2-en-1-one formed was recovered by extraction and crystallisation.

A mixture of 7.9 g (0.050 mole) bromobenzene in 15 ml tetrahydrofuran was slowly added to a mixture of 34 ml of a solution of n-butyllithium in hexane (1.6 mole/l, 0.055 mole n-butyllithium) and 40 ml tetrahydrofuran at -80 °C. At -40 °C 4.7 g (0.030 mole) 3-phenylcyclopent-2-en-1-one, dissolved in a small amount of tetrahydrofuran, was slowly added. The resultant mixture was allowed to adopt room temperature. Methanol and water were added. The 1,3-diphenylcyclopentadiene formed was recovered by extraction and crystallisation.

A solution (1.4 ml) of n-butyllithium in hexane (1.6 mole/l, 0.0023 mole n-butyllithium) was added slowly at -80 °C to 0.50 g 1,3-diphenylcyclopentadiene (0.0023 mole) dissolved in 20 ml tetrahydrofuran. The mixture thus obtained was allowed to adopt room temperature. A mixture of 0.268 g (0.00115 mole) zirconium tetrachloride in 10 ml tetrahydrofuran was slowly added. After stirring the mixture for two hours, the solvents were evaporated. The solid material obtained was taken up in toluene and centrifuged. The supernatent was decanted and cooled to -20 °C. The crystallised product was recovered by filtration.

### Examples 13 - 23

### Polymerisation of propene

A solution of 0.30 g of a purchased sample of methylaluminoxane, dissolved in toluene, was siphoned into an evacuated, mechanically stirred autoclave which was kept at 20 °C, and subsequently propene was introduced to obtain and maintain a pressure of 6.0 bar. In Examples 13 - 19 the temperature was maintained at 20 °C and in Examples 20 - 23 the temperature was increased to 30 °C. A sample of a zirconium compound (0.00001 mole) dissolved in toluene was injected into the autoclave by means of an injection device. The injection device was immediately rinsed with toluene which was added to the contents of the autoclave thus bringing the total volume of toluene to about 250 ml. The reaction times applied in the various Examples were in the range of from 15 minutes, for a reaction with a relatively high reaction rate, to 2.5 hours, for a reaction with a relatively low reaction rate. The reaction was terminated by releasing the pressure in the autoclave and subsequently removing the remaining volatile materials in vacuum at a temperature of up to 80 °C. The polymer obtained was weighed and analysed by ¹H-NMR and ¹³C-NMR for determination of the number-average molecular weight.

This procedure was carried out using, as the zirconium compound, bis(cyclopentadienyl)zirconium dichloride and bis(mono-, di- and triarylcyclopentadienyl)zirconium dichlorides as specified in Table 2. The bis(mono-, di- and triarylcyclopentadienyl)zirconium dichlorides were prepared as indicated in Examples 1 - 5 and 8 - 12, respectively.

The average rates of polymerisation and the number-average molecular weights of the polymer products are given in Table 2. The NMR-spectra revealed that the polymers were atactic polypropylenes and that no other end groups were present than vinylidene groups, viz. groups of the formula -C(CH₃)=CH₂, and n-propyl groups. The vinylidene and n-propyl groups were present virtually in a 1:1 molar ratio.

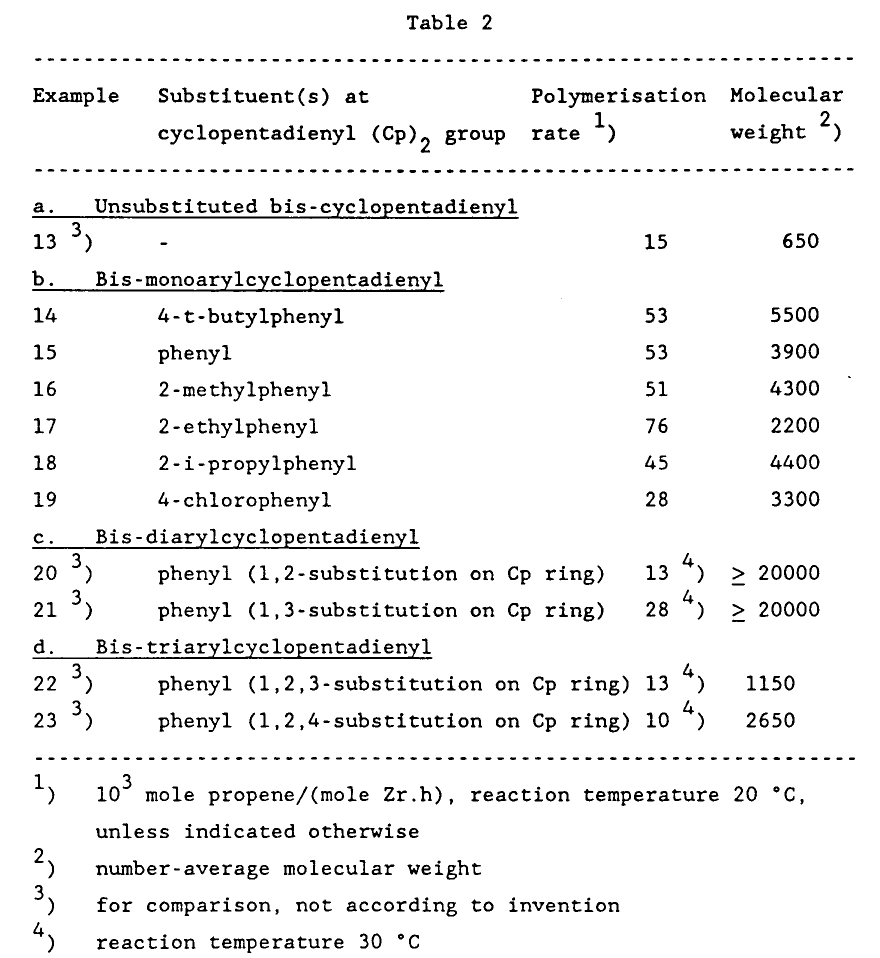

### Examples 24 - 28

### Polymerisation of propene

The methods outlined in comparative Example 13 were essentially repeated except that the reaction temperature was 45 °C instead of 20 °C and that a different purchased sample of methylaluminoxane was used.

The procedure was carried out using, as the zirconium compound, bis(cyclopentadienyl)zirconium dichloride, bis(monoarylcyclopentadienyl)zirconium dichlorides and bis(monomethylcyclopentadienyl)zirconium dichloride as specified in Table 3. The bis(monoarylcyclopentadienyl)zirconium dichlorides were prepared as indicated in Examples 1, 6 and 7.

The average rates of polymerisation and the number-average molecular weights of the polymer products are given in Table 3. The NMR-spectra revealed that the polymers were atactic polypropylenes and that no other end groups were present than vinylidene groups, viz. groups of the formula -C(CH₃)=CH₂, and n-propyl groups. The vinylidene and n-propyl groups were present virtually in a 1:1 molar ratio.

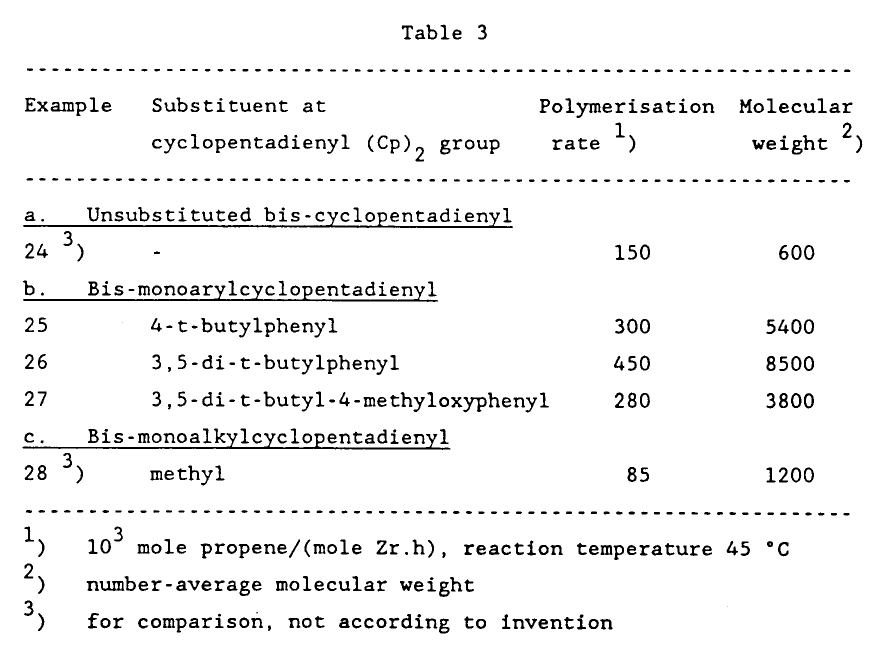

### Examples 29 - 33

### Polymerisation of propene

The methods outlined in comparative Examples 24-28 were essentially repeated except that a different purchased sample of methylaluminoxane was used.

The procedure was carried out using, as the zirconium compound, two bis(monoarylcyclopentadienyl)zirconium dichlorides and two (cyclopentadienyl)(arylcyclopentadienyl)zirconium dichlorides as specified in Table 4. They were prepared as indicated in Example 1, except that 4-methoxy-3,5-di-t-butylphenylbromide, 2-methoxy-3,5-di-t-butylphenylbromide and 3-methoxy-phenyl bromide were used instead of 4-t-butylphenylbromide in examples 29, 30, and 33, respectively, and cyclopentadienyl zirconium trichloride was used instead of zirconium tetrachloride in examples 31 and 32.

The average rates of polymerisation and the number-average molecular weights of the polymer products are given in Table 4. The NMR-spectra revealed that the polymers were atactic polypropylenes and that no other end groups were present than vinylidene groups, viz. groups of the formula -C(CH₃)=CH₂, and n-propyl groups. The vinylidene and n-propyl groups were present virtually in a 1:1 molar ratio.

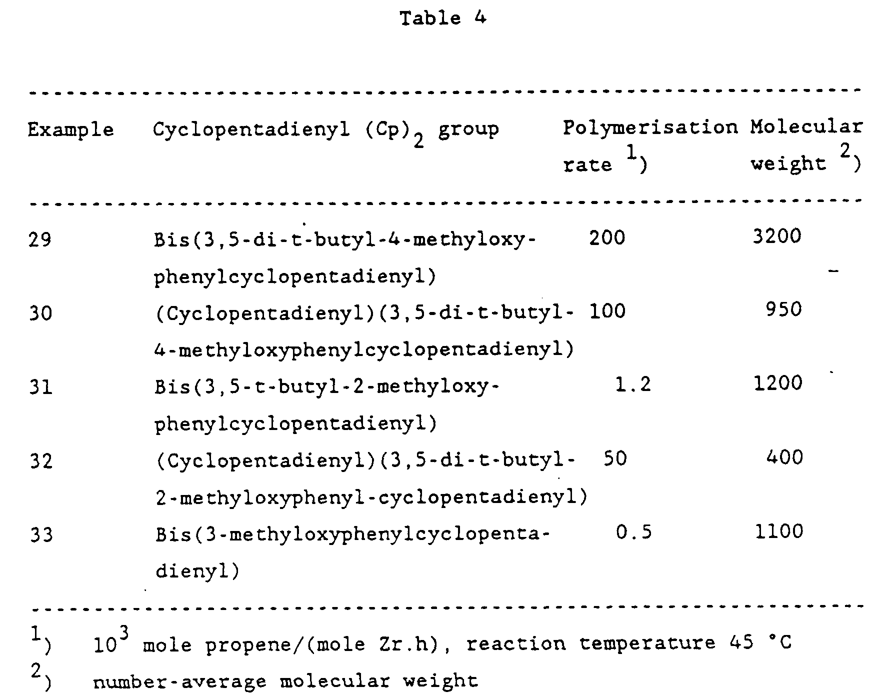

### Examples 34 - 37 (for comparison)

### Polymerisation of propene

The methods outlined in comparative Example 13 were essentially repeated using 1,2-ethylene-bis(indenyl)zirconium dichloride, 1,2-ethylene-bis(3-phenylindenyl)zirconium dichloride, 1,2-ethylene-bis[3-(4-methylphenyl)indenyl]zirconium dichloride or 1,2-ethylene-bis[3-(3,5-dimethyl-4-methyloxyphenyl)indenyl]zirconium dichloride as the zirconium compound.

The average rates of polymerisation and the number-average molecular weights of the polymer products are given in Table 5.

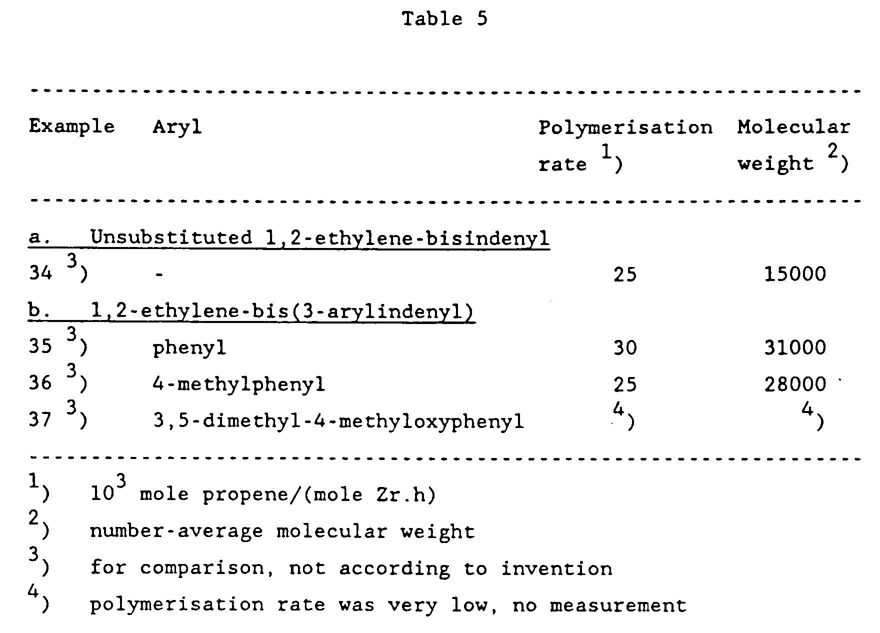

## Claims

1. Catalyst composition based upon
a. a Group IVA metal compound of the general formula (Cp)ₚMeX₄₋ₚ wherein Cp represents identical or different cyclopentadienyl groups which are not mutually bridged and which may be substituted with one or more hydrocarbyl groups with the understanding that at least one cyclopentadienyl group is substituted with a single optionally substituted aryl group, Me represents a Group IVA metal, X represents one or more substituents attached to the Group IVA metal which substituents are selected from the group consisting of hydrocarbyl groups, hydrocarboxy groups, hydrocarbamide groups, hydrogen and halogen, and p is an integer of from 1 to 4, and
b . an aluminoxane.

2. Catalyst composition according to claim 1, characterized in that p is 2.

3. Catalyst composition according to claim 1 or 2, characterized in that the aryl group attached to a cyclopentadienyl group is a phenyl group.

4. Catalyst composition according to any one of claims 1 to 3, characterized in that the aryl group(s) are further substituted with one or more t-alkyl groups.

5. Catalyst compositions according to any one of claims 1 to 4, characterized in that the aryl groups are further substituted with one or more shielded alkyloxy groups, or shielded dialkylamino groups.

6. Catalyst composition according to any one of claims 1 to 5, characterized in that the Group IVA metal is selected from the group consisting of zirconium and hafnium.

7. Catalyst composition according to any one of claims 1 to 6, characterized in that they are based on a Group IVA metal compound selected from the group consisting of bis(phenylcyclopentadienyl)zirconium dichloride, bis[(4-t-butylphenyl)cyclopentadienyl]zirconium dichloride, bis[(2-methylphenyl)cyclopentadienyl]zirconium dichloride, bis[(2-ethylphenyl)cyclopentadienyl]zirconium dichloride, bis[(2-i-propylphenyl)cyclopentadienyl]zirconium dichloride, bis[(4-chlorophenyl)cyclopentadienyl]zirconium dichloride, bis[(3,5-di-t-butylphenyl)cyclopentadienyl]zirconium dichloride, bis[(3,5-di-t-butyl-4-methyloxyphenyl)cyclopentadienyl]zirconium dichloride, (cyclopentadienyl)(3,5-di-t-butyl-4-methoxyphenylcyclopentadienyl)zirconium dichloride, bis(3,5-di-t-butyl-2-methoxyphenylcyclopentadienyl)zirconium dichloride, (cyclopentadienyl)(3,5-di-t-butyl-2-methoxyphenylcyclopentadienyl)zirconium dichloride and bis(3-methoxyphenylcyclopentadienyl)zirconium dichloride.

8. Catalyst composition according to any one of claims 1 to 7, characterized in that the molar ratio of the Group IVA metal compound to the aluminoxane is within the range of from 50 to 2000, calculated as gram atom aluminium per gram atom Group IVA metal.

9. Process for the polymerisation of one or more alpha-olefins comprising contacting the alpha-olefin(s) with a catalyst composition according to any one of claims 1 - 8.

10. Process according to claim 9, characterized in that the alpha-olefin is propene.

11. Process according to claim 9 or 10, characterized in that the polymerisation is carried out at a temperature within the range of from 0 to 100 °C and at a pressure within the range of from 1 to 100 bar.

12. Group IVA metal compounds of the general formula (Cp)ₚMeX₄₋ₚ wherein Cp represents identical or different cyclopentadienyl groups which may be substituted with one or more hydrocarbyl groups with the understanding that at least one cyclopentadienyl group is substituted with a single optionally substituted aryl group, Me represents a Group IVA metal, X represents one or more substituents attached to the Group IVA metal which substituents are selected from the group consisting of hydrocarbyl groups, hydrocarboxy groups, hydrocarbamide groups, hydrogen and halogen, and p is an integer of from 1 to 4.

13. Group IVA metal compounds as claimed in claim 12, characterized in that they are selected from the group consisting of bis(phenylcyclopentadienyl)zirconium dichloride, bis[(4-t-butylphenyl)cyclopentadienyl]zirconium dichloride, bis[(2-methylphenyl)cyclopentadienyl]zirconium dichloride, bis[(2-ethylphenyl)cyclopentadienyl]zirconium dichloride, bis[(2-i-propylphenyl)cyclopentadienyl]zirconium dichloride, bis[(4-chlorophenyl)cyclopentadienyl]zirconium dichloride, bis[(3,5-di-t-butylphenyl)cyclopentadienyl]zirconium dichloride bis[(3,5-di-t-butyl-4-methyloxyphenyl)cyclopentadienyl]zirconium dichloride, (cyclopentadienyl)(3,5-di-t-butyl-4-methoxyphenylcyclopentadienyl)zirconium dichloride, bis(3,5-di-t-butyl-2-methoxyphenylcyclopentadienyl)zirconium dichloride, (cyclopentadienyl)(3,5-di-t-butyl-2-methoxyphenylcyclopentadienyl)zirconium dichloride and bis(3-methoxyphenylcyclopentadienyl)zirconium dichloride.

## Patentansprüche

1. Katalysatorzusammensetzung, basierend auf
a. einer Verbindung eines Metalls der Gruppe IVA der allgemeinen Formel (Cp)ₚMeX₄₋ₚ, in der Cp für gleiche oder verschiedene Cyclopentadienylgruppen, die nicht miteinander verbrückt sind und mit einer oder mehreren Hydrocarbylgruppen substituiert sein können, steht, mit der Maßgabe, daß mindestens eine Cyclopentadienylgruppe mit einer einzelnen, gegebenenfalls substituierten Arylgruppe substituiert ist, Me für ein Metall der Gruppe IVA steht, X für einen oder mehrere an das Metall der Gruppe IVA gebundene Substituenten steht, wobei die Substituenten aus der Gruppe, bestehend aus Hydrocarbylgruppen, Hydrocarboxygruppen, Hydrocarbamidgruppen, Wasserstoff und Halogen, ausgewählt sind und p eine ganze Zahl von 1 bis 4 ist, und
b. einem Aluminoxan.

2. Katalysatorzusammensetzung nach Anspruch 1, dadurch gekennzeichnet, daß p gleich 2 ist.

3. Katalysatorzusammensetzung nach Anspruch 1 oder 2, dadurch gekennzeichnet, daß es sich bei der an eine Cyclopentadienylgruppe gebundenen Arylgruppe um eine Phenylgruppe handelt.

4. Katalysatorzusammensetzung nach einem der Ansprüche 1 bis 3, dadurch gekennzeichnet, daß die Arylgruppe(n) weiterhin mit einer oder mehreren t-Alkylgruppen substituiert ist/sind.

5. Katalysatorzusammensetzungen nach einem der Ansprüche 1 bis 4, dadurch gekennzeichnet, daß die Arylgruppen weiterhin mit einer oder mehreren geschützten Alkyloxygruppen oder geschützten Dialkylaminogruppen substituiert sind.

6. Katalysatorzusammensetzung nach einem der Ansprüche 1 bis 5, dadurch gekennzeichnet, daß das Metall der Gruppe IVA aus der Gruppe bestehend aus Zirkonium und Hafnium ausgewählt wird.

7. Katalysatorzusammensetzung nach einem der Ansprüche 1 bis 6, dadurch gekennzeichnet, daß sie auf einer Verbindung eines Metalls der Gruppe IVA basieren, welche aus der Gruppe, bestehend aus Bis(phenylcyclopentadienyl)zirkoniumdichlorid, Bis[(4-t-butylphenyl)cyclopentadienyl]zirkoniumdichlorid, Bis[(2-methylphenyl)cyclopentadienyl]zirkonium-dichlorid, Bis[(2-ethylphenyl)cyclopentadienyl]zirkoniumdichlorid, Bis[(2-isopropylphenyl)cyclopentadienyl]zirkoniumdichlorid, Bis[(4-chlorphenyl)cyclopentadienyl]-zirkoniumdichlorid, Bis[(3,5-di-t-butylphenyl)cyclopentadienyl]zirkoniumdichlorid, Bis[(3,5-di-t-butyl-4-methyloxyphenyl)cyclopentadienyl]zirkoniumdichlorid, (Cyclopentadienyl)(3,5-di-t-butyl-4-methoxyphenylcyclopentadienyl)zirkoniumdichlorid, Bis(3,5-di-t-butyl-2-methoxyphenylcyclopentadienyl)zirkoniumdichlorid, (Cyclopentadienyl)-(3,5-di-t-butyl-2-methoxyphenylcyclopentadienyl)zirkoniumdichlorid und Bis(3-methoxyphenylcyclopentadienyl)zirkoniumdichlorid, ausgewählt ist.

8. Katalysatorzusammensetzung nach einem der Ansprüche 1 bis 7, dadurch gekennzeichnet, daß das Molverhältnis der Verbindung des Metalls der Gruppe IVA zu dem Aluminoxan im Bereich von 50 bis 2000 liegt und als Grammmatome Aluminium je Grammatom Gruppe-IVA-Metall berechnet ist.

9. Verfahren zur Polymerisation eines oder mehrerer alpha-Olefine, wobei man das/die alpha-Olefin(e) mit einer Katalysatorzusammensetzung nach einem der Ansprüche 1 - 8 kontaktiert.

10. Verfahren nach Anspruch 9, dadurch gekennzeichnet, daß es sich bei dem alpha-Olefin um Propen handelt.

11. Verfahren nach Anspruch 9 oder 10, dadurch gekennzeichnet, daß man die Polymerisation bei einer Temperatur im Bereich von 0 bis 100°C und bei einem Druck im Bereich von 1 bis 100 bar durchführt.

12. Verbindungen eines Metalls der Gruppe IVA der allgemeinen Formel (Cp)ₚMeX₄₋ₚ, in der Cp für gleiche oder verschiedene Cyclopentadienylgruppen steht, welche mit einer oder mehreren Hydrocarbylgruppen substituiert sein können, mit der Maßgabe, daß mindestens eine Cyclopentadienylgruppe mit einer einzelnen, gegebenenfalls substituierten Arylgruppe substituiert ist, Me für ein Metall der Gruppe IVA steht, X für einen oder mehrere an das Metall der Gruppe IVA gebundene Substituenten steht, wobei die Substituenten aus der Gruppe, bestehend aus Hydrocarbylgruppen, Hydrocarboxygruppen, Hydrocarbamidgruppen, Wasserstoff und Halogen, ausgewählt sind und p eine ganze Zahl von 1 bis 4 ist.

13. Verbindungen eines Metalls der Gruppe IVA nach Anspruch 12, dadurch gekennzeichnet, daß diese aus der Gruppe, bestehend aus Bis(phenylcyclopentadienyl)zirkoniumdichlorid, Bis[(4-t-butylphenyl)cyclopentadienyl]zirkoniumdichlorid, Bis[(2-methylphenyl)cyclopentadienyl]zirkoniumdichlorid, Bis[(2-ethylphenyl)cyclopentadienyl]zirkoniumdichlorid, Bis[(2-isopropylphenyl)cyclopentadienyl]zirkoniumdichlorid, Bis[(4-chlorphenyl)cyclopentadienyl]zirkoniumdichlorid, Bis[(3,5-di-t-butylphenyl)cyclopentadienyl]zirkoniumdichlorid, Bis[(3,5-di-t-butyl-4-methyloxyphenyl)cyclopentadienyl]zirkoniumdichlorid, (Cyclopentadienyl) (3,5-di-t-butyl-4-methoxyphenylcyclopentadienyl)zirkoniumdichlorid, Bis(3,5-di-t-butyl-2-methoxyphenylcyclopentadienyl)zirkoniumdichlorid, (Cyclopentadienyl)(3,5-di-t-butyl-2-methoxyphenylcyclopentadienyl)zirkoniumdichlorid und Bis(3-methoxyphenylcyclopentadienyl)zirkoniumdichlorid, ausgewählt sind.

## Revendications

1. Composition de catalyseur à base de
a. un composé d'un métal de groupe IVA de formule générale (Cp)ₚMeX₄₋ₚ, dans laquelle Cp représente des groupes cyclopentadiényle identiques ou différents qui ne sont pas pontés mutuellement et qui peuvent être substitués par un ou plusieurs groupes hydrocarbyle, étant entendu qu'au moins un groupe cyclopentadiényle est substitué par un seul groupe aryle, éventuellement substitué, Me représente un métal du groupe IVA, X représente un ou plusieurs substituants fixés au métal du groupe IVA, ces substituants étant choisis dans le groupe constitué par les groupes hydrocarbyle, les groupes hydroxycarboxy, les groupes hydrocarbamide, l'hydrogène et un halogène, et p est un nombre entier de 1 à 4, et
b. un aluminoxane.

2. Composition de catalyseur selon la revendication 1, caractérisée en ce que p est égal à 2.

3. Composition de catalyseur selon la revendication 1 ou 2, caractérisée en ce que le groupe aryle fixé à un groupe cyclopentadiényle est un groupe phényle.

4. Composition de catalyseur selon l'une quelconque des revendications 1 à 3, caractérisée en ce que le ou les groupes aryle sont aussi substitués par un ou plusieurs groupes t-alkyle.

5. Compositions de catalyseur selon l'une quelconque des revendications 1 à 4, caractérisée en ce que les groupes aryle sont aussi substitués par un ou plusieurs groupes alkyloxy blindés, ou par un ou plusieurs groupes dialkylamino blindés.

6. Composition de catalyseur selon l'une quelconque des revendications 1 à 5, caractérisée en ce que le métal du groupe IVA est choisi parmi le zirconium et l'hafnium.

7. Composition de catalyseur selon l'une quelconque des revendications 1 à 6, caractérisée en ce qu'elle est à base d'un composé d'un métal du groupe IVA choisi dans le groupe constitué par le dichlorure de bis(phénylcyclopendiényl)zirconium, le dichlorure de bis[(4-butylphényl)cyclopentadiényl]zirconium, le dichlorure de bis[(2-méthylphényl)cyclopentadiényl]zirconium, le dichlorure de bis[(2-éthylphényl)cyclopentadiényl]zirconium, le dichlorure de bis[(2-isopropylphényl)cyclopentadiényl]zirconium, le dichlorure de bis[(4-chlorophényl)cyclopentadiényl]zirconium, le dichlorure de bis[(3,5-di-butylphényl)cyclopentadiényl]zirconium, le dichlorure de bis[(3,5-di-t-butyl)-4-méthyloxyphényl)cyclopentadiényl]zirconium, le dichlorure de (cyclopentadiényl)(3,5-di-t-butyl-4-méthoxyphénylcyclopentadiényl)zirconium, le dichlorure de bis(3,5-di-t-butyl-2-méthoxyphénylcyclopentadiényl)zirconium, le dichlorure de (cyclopentadiényl) (3,5-di-t-butyl-2-méthoxyphénylcyclopentadiényl)zirconium et de dichlorure de bis(3-méthoxyphénylcyclopentadiényl)zirconium.

8. Composition de catalyseur selon l'une quelconque des revendications 1 à 7, caractérisée en ce que le rapport molaire du composé du métal groupe IVA à l'aluminoxane est dans la gamme de 50 à 2 000, calculé en atome-grammes d'aluminium par atome-gramme de métal du groupe IVA.

9. Procédé de polymérisation d'une ou de plusieurs alpha-oléfines, comprenant la mise en contact de la ou des alpha-oléfines avec une composition de catalyseur selon l'une quelconque des revendications 1-8.

10. Procédé selon la revendication 9, caractérisé en ce que l'alpha-oléfine est le propène.

11. Procédé selon la revendication 9 ou 10, caractérisé en ce que la polymérisation est réalisée à une température de 0 à 100°C et sous une pression dans la gamme de 1 à 100 bars.

12. Composés de métaux du groupe IVA de formule générale (Cp)ₚMeX₄₋ₚ, dans laquelle Cp représente des groupes cyclopentadiényle identiques ou différents qui peuvent être substitués par un ou plusieurs groupes hydrocarbyle, étant entendu qu'au moins un groupe cyclopentadiényle est substitué par un seul groupe aryle, éventuellement substitué, Me représente un métal du groupe IVA, X représente un ou plusieurs substituants fixés au métal du groupe IVA, ces substituants étant choisis dans le groupe constitué par les groupes hydrocarbyle, les groupes hydroxycarboxy, les groupes hydrocarbamide, l'hydrogène et un halogène, et p est un nombre entier de 1 à 4.

13. Composés de métaux du groupe IVA selon la revendication 12, caractérisés en ce qu'ils sont choisis dans le groupe constitué par le dichlorure de bis(phénylcyclopendiényl)zirconium, le dichlorure de bis[(4-butylphényl)cyclopentadiényl]zirconium, le dichlorure de bis[(2-méthylphényl)cyclopentadiényl]zirconium, le dichlorure de bis[(2-éthylphényl)cyclopentadiényl]zirconium, le dichlorure de bis[(2-isopropylphényl)cyclopentadiényl]zirconium, le dichlorure de bis[(4-chlorophényl)cyclopentadiényl] - zirconium, le dichlorure de bis[(3,5-di-butylphényl)cyclopentadiényl]zirconium, le dichlorure de bis[(3,5-di-t-butyl)-4-méthyloxyphényl)cyclopentadiényl]zirconium, le dichlorure de (cyclopentadiényl)(3,5-di-t-butyl-4-méthoxyphénylcyclopentadiényl)zirconium, le dichlorure de bis(3,5-di-t-butyl-2-méthoxyphénylcyclopentadiényl)zirconium, le dichlorure de (cyclopentadiényle)(3,5-di-t-butyl-2-méthoxyphénylcyclopentadiényl)zirconium et de dichlorure de bis(3-méthoxyphénylcyclopentadiényl)zirconium.
